# EUROPEAN PATENT APPLICATION

(11) **EP 1 684 470 A1**
(43) Date of publication of application: **26.07.2006**
(21) Application number: 04799614.5
(22) Date of filing: 11.11.2004
(51) Int. Cl.: H04L 12/56

(54) **ACCESS ROUTER APPARATUS, COMMUNICATION HANDOVER SYSTEM USING THE SAME, AND COMMUNICATION HANDOVER METHOD USING THE SAME**

(30) Priority: 11.11.2003 JP 2003380882
(71) Applicant: MATSUSHITA ELECTRIC INDUSTRIAL CO., LTD., Kadoma-shi, Osaka 571-8501 (JP)
(72) Inventor: KASAPIDIS, Makis, Matsushita Electr. Ind. Co. Ltd., Chuo-ku,Osaka-shi, Osaka 540-6319 (JP)
(74) Representative: Pautex Schneider, Nicole Véronique
(86) International application number: PCT/JP2004/016753
(87) International publication number: WO 2005/046144

(57) **Abstract**

The present invention provides a technique to reduce time delay caused by message exchange or the like and to carry out fast handover. According to this technique, FBack is promptly returned by a mobile node (MN) without performing the processing (the processing to cause delay) that previous access router pAR transmits HI message in response to FBU message from MN and waits for HAck message. Specifically, a usable address (nCoA usable at subnet of nAR) is selected when MN is connected to nAR from a table in response to FBU from MN, and FBack including the nCoA is returned to MN promptly regardless of transmitting and receiving of HI/HAck message to and from nAR. As a result, it is possible, for instance, to reduce time delay caused by HI/HAck message exchange and to carry out fast handover.

## Description

### TECHNICAL FIELD

The present invention relates to an access router apparatus for actualizing fast handover operation of a mobile terminal to carry out radio communication, a communication handover system, and a method of communication handover using the same. In particular, the invention relates to a technique to carry out fast handover operation in a mobile terminal for carrying out radio communication using Mobile IPv6 (Mobile Internet Protocol version 6).

### BACKGROUND ART

In recent years, the use of mobile IPv6, which is said to be the next generation Internet protocol, has been propagated as a technique to provide seamless connection of communication network (even when moving) to users to have access to communication network such as Internet via radio network from a mobile terminal. The technique relating to the mobile IPv6 is disclosed, for instance, in the Non-Patent Document 1 as given below.

Also, fast handover technique is known as a technique to smoothly continue radio communication even when moving from a subnet with the mobile terminal to another subnet in a radio communication system using the mobile IPv6. This technique is disclosed, for instance, in the Non-Patent Document 2 given below.

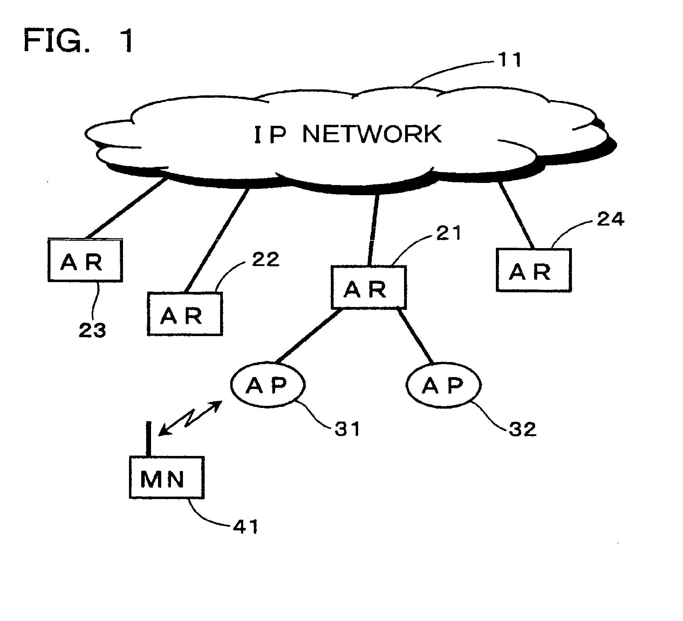

Brief description will be given below on an example of handover procedure using Fast Mobile IP (FMIP). Fig. 1 is a schematical drawing to show an arrangement of a radio communication system. A communication network such as Internet is shown as an IP network 11. A plurality of access routers (AR) 21, 22, 23, and 24 are connected to the IP network 11. Access points (AP) 31 and 32 are connected to AR21, and a mobile node (MN) 41 is connected via radio to AP31. Specifically, MN41 is connected to AR21 via AP31. This AR21 is defined as a previous access router (pAR), to which AR21 is connected previously.

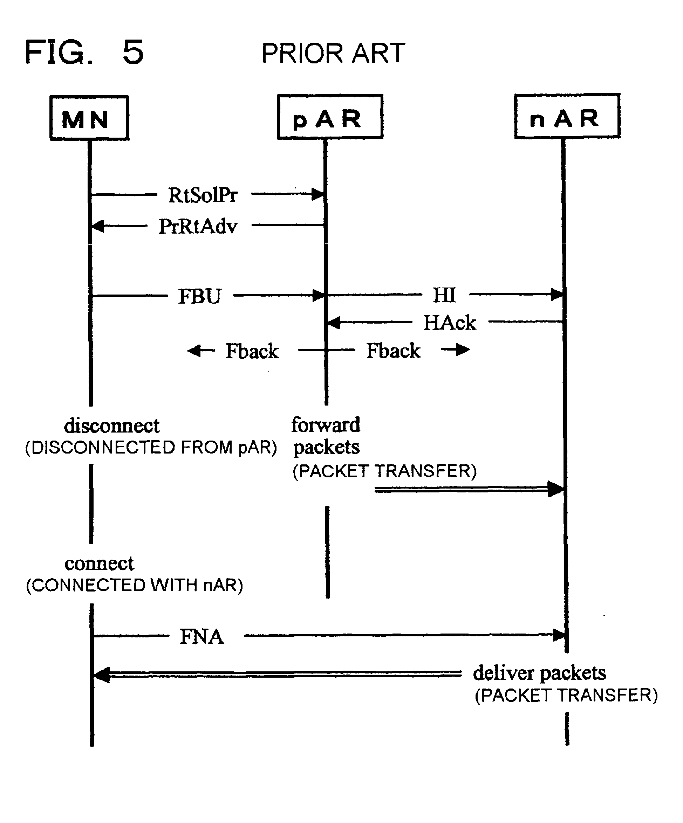

Fig. 5 is a sequence chart to show an operation example when MN carries out handover in the radio communication system. From pAR, MN41 receives an information relating to the access router, to which it is wanted to connect according to physical transition of the terminal. This information is contained in a PrRtAdv (Proxy Router Advertisement) message. This PrRtAdv message is either spontaneously transmitted by pAR or it is requested from MN41 as a RtSolPr (Router Solicitation for Proxy or Router Solicitation for Proxy Advertisement) message. By using this information, MN41 constitutes a new Care of address (nCoA). This nCoA is included in Fast Binding Update (FBU) message to be sent to pAR.

In this case, pAR sends a Handover Initiation (HI) message to a new Access Router (nAR). Then, pAR notifies nAR that MN41 will soon carry out connection (i.e. carry out handover) and notifies nCoA, which MN41 is going to use. Then, nAR responds to it by a Handover Acknowledgement (HAck) message to acknowledge the permit to use nCoA or by a HAck message to propose a proxy address.

In this case, pAR sends a Fast Binding Acknowledgement (FBack) message to both of MN and nAR. In case MN41 is connected to nAR, transfer of buffered packet to nAR is started by transmitting a Fast Neighbor Advertisement (FNA) message.

In case the acknowledgement (acknowledgement transferred by FBack) of the fact that nCoA generated by MN41 can be used in the connection with nAR does not reach MN41 before connection between MN41 and pAR is disconnected, MN41 encapsulates a new FBU in FNA message and must wait for the permit to use nCoA, which MN41 is going to use.

One of the causes that FBack may not be transmitted from pAR to MN before the connection will be lost is the delay caused by exchange of HI and HAck messages, for example.
Non-Patent Document 1: D. Johnson, C. Perkins, and J. Arkko: "Mobility Support in Ipv6"; draft-ietf-mobileip-ipv6-24; June 2003.
Non-Patent Document 2: Rajeev Koodli: "Fast Handovers for Mobile Ipv6"; draft-ietf-mobileip-fast-mipv6-08, October 2003.

### DISCLOSURE OF THE INVENTION

### PROBLEMS TO BE SOLVED BY THE INVENTION

As described above, in the conventional arrangement as described above, there have been problems, for example, in that fast handover is inhibited due to the delay caused by exchange of HI and HAck messages.

To solve the above problems in the conventional technique, it is an object of the present invention to provide an access router apparatus, a communication handover system using the same, and a communication handover method using the same, by which it is possible to reduce time delay caused by message exchange or the like, and which has fast handover function.

### MEANS FOR SOLVING THE PROBLEM

To attain the above object, the present invention provides an access router apparatus to control a subnet, which comprises
address information storing means for storing address information usable in at least one adjacent subnet arranged adjacent to said subnet controlled by the apparatus itself;
address selecting means for selecting said address information stored in said address information storing means; and
address providing means for providing said address information selected by said address selecting means to a mobile terminal connected to said subnet controlled by the apparatus itself.
With the arrangement as described above, it is possible to promptly provide an address information (nCoA) relating to access route of handover destination to a mobile terminal without performing the processing by communication with an access router to control an adjacent subnet (e.g. exchange of HI and HAck messages), and it is also possible to carry fast handover.

Also, in addition to the above arrangement, the present invention provides an access router apparatus, wherein there is provided address information updating means for acquiring said address information from the access router to control said adjacent subnet and for storing said acquired address information to said address information storing means.
With the arrangement as described above, the access route can acquire a new address information from other access router to control adjacent subnet and can maintain new address information at all times.

Further, in addition to the above arrangement, the present invention provides an access router apparatus, wherein said address selecting means is designed to select said address information to be provided to said mobile terminal in response to a request from said mobile terminal.
With the arrangement as described above, the access router can select and provide an address information as required by a mobile terminal in response to the timing, at which the mobile terminal needs the address information.

Also, in addition to the above arrangement, the present invention provides an access router apparatus, wherein said address selecting means selects said address information usable in said adjacent subnet at handover destination of said mobile terminal according to identification information related to said adjacent subnet received from said mobile terminal.
With the arrangement as described above, the access router can select and provide an address information required by a mobile terminal at a specific adjacent subnet by identifying an access router at handover destination of the mobile terminal, for instance.

Also, in addition to the arrangement as described above, the present invention provides an access router apparatus, wherein, in case said address information is provided by said address providing means to said mobile terminal, said address information provided by said address providing means is deleted from said address information stored in said address information storing means.
With the arrangement as described above, the access router can control so that the address information provided to a specific mobile terminal is not provided again to another mobile terminal and uniqueness required for the address information can be maintained.

Further, in addition to the arrangement as described above, the present invention provides an access router apparatus, wherein said apparatus is provided with a function relating to fast handover, and said address providing means is designed to transmit FBack message or PrRtAdv message including said address information selected by said address selecting means to said mobile terminal.
With the arrangement as described above, by using the messages transmitted and received in the fast handover technique such as FMIP, it is possible to promptly provide an address information (nCoA) relating to an access router of handover destination to the mobile terminal without performing the processing by communication with an access router to control adjacent subnet (e.g. exchange of HI and HAck messages), and to carry out the fast handover.

To attain the above object, the present invention provides a communication handover system, which comprises a plurality of apparatuses, each controlling a subnet, said system further comprising:
address information storing means for storing an address information usable in at least one adjacent subnet arranged adjacent to said subnet controlled by the apparatus itself, address selecting means for selecting said address information stored in said address information storing means, and address providing means for providing said address information selected by said address selecting means to a mobile terminal connected to said subnet controlled by the apparatus itself; and
said mobile terminal acquires said address information stored in said address information storing means from said specific access router apparatus under the condition that it is connected to said subnet of said specific access router prior to the handover to said adjacent subnet from said subnet.
With the arrangement as described above, it is possible to promptly provide an address information (nCoA) relating to an access router of handover destination to the mobile terminal without performing the processing by communication with the access router to control adjacent subnet (e.g. exchange of HI and HAck messages).

Further, to attain the above object, the present invention provides a communication handover method in a communication handover system, which comprises a plurality of access router apparatuses, each controlling a subnet, said method comprising the steps of:
acquiring and maintaining an address information usable in at least one adjacent subnet arranged adjacent to said subnet controlled by the apparatus itself by one access router apparatus among said plurality of access router apparatuses; and
providing said address information maintained by said access router apparatus where said mobile terminal is connected when a mobile terminal connected to one access router apparatus among said plurality of access router apparatuses carries out handover to said adjacent subnet from said subnet controlled by one access router apparatus among said plurality of access router apparatuses.
With the arrangement as described above, it is possible to promptly provide an address information (nCoA) relating to an access router of handover destination to a mobile terminal without performing the processing by communication with an access router to control adjacent subnet (e.g. exchange of HI and HAck messages), and to carry out the fast handover.

### ADVANTAGEOUS EFFECTS OF THE INVENTION

According to the present invention, it is possible to reduce time delay caused by message exchange or the like and to carry out high-speed communication by executing fast handover.

### BRIEF DESCRIPTION OF THE DRAWINGS

Fig. 1 is a schematical drawing to show an arrangement of a radio communication system commonly used in the present invention and in conventional technique.
Fig. 2 is a block diagram to show an arrangement of AR in an embodiment of the present invention.
Fig. 3 is a sequence chart showing an operation example when MN carries out handover operation in a radio communication system in an embodiment of the present invention.
Fig. 4 is a drawing schematically showing an example of a certain condition where a plurality of ARs are present geographically in the surroundings in a radio communication system in the embodiment of the present invention.
Fig. 5 is a sequence chart showing an operation example in case MN carries out handover operation in a conventional type radio communication system.

### BEST MODE FOR CARRYING OUT THE INVENTION

Detailed description will be given below on an embodiment of the present invention referring to the drawings.

Fig. 1 is a schematical drawing to show an arrangement of a radio communication system commonly used in the present invention and in the conventional technique. The arrangement shown in Fig. 1 is the same as that of the conventional technique, and detailed description is not given here.

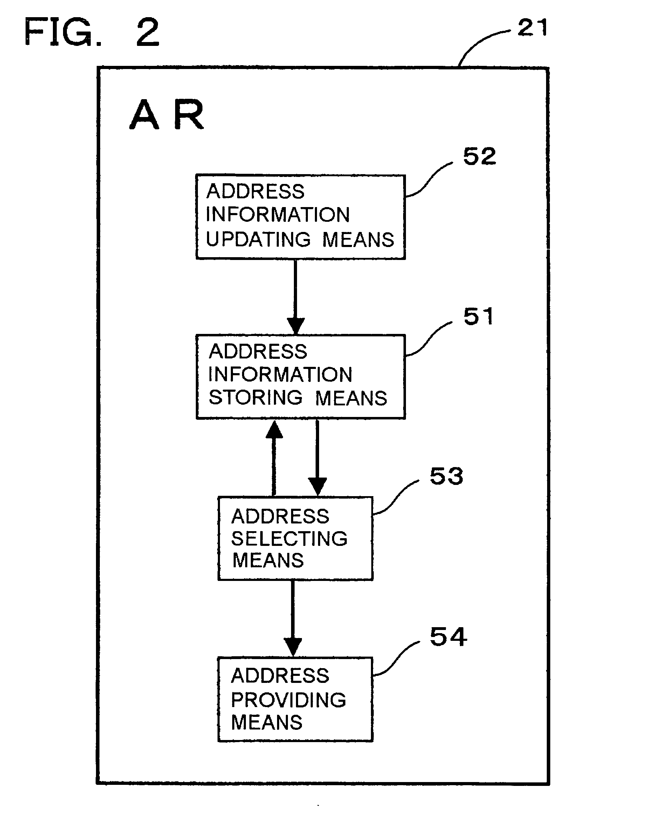

Fig. 2 is a block diagram showing an arrangement of AR21 according to the present invention. AR21 is connected to MN41 by radio means via AP31.

Now, pAR comprises a table, i.e. address information storing means 51, for storing an address information (address information usable in subnet of access router) possessed by at least one access router present geographically in the surroundings (AR22 and AR23, AR24, etc. in Fig. 1), address information updating means 52 for updating an address information stored in the address information storing means 51 by acquiring an updated address information from AR22 and the like in the surrounding to an updated address information, address selecting means 53 for selecting an address usable from the information storing means 51 in response to a request from a mobile terminal (MN41), and address providing means 54 for providing an address selected by the address selecting means 53 to MN41. Also, as described later, in case an address information selected by the address selecting means 53 is provided to MN41 via FBack message and RtSolPr message, for instance, it is arranged in such manner that the above address information provided to MN41 from the table of the address information storing means 51 is deleted at an instruction from the address selecting means 53.

The table possessed by the address information storing means 51 of pAR maintains a small number of unique nCoA to each of the access routers geographically in the surroundings. This unique nCoA is an address, which has been confirmed as unique by DAD (Duplicate Address Detection) processing, for instance. The access router present geographically in the surroundings indicates another access router for controlling a subnet (an adjacent subnet) adjacent to a subnet of a certain nAR. That is, it is an access router, which can be the next connection point in case MN41 performs handover from the subnet of pAR. The access router, which may be the next connection point after this handover, may also be called a potential nAR.

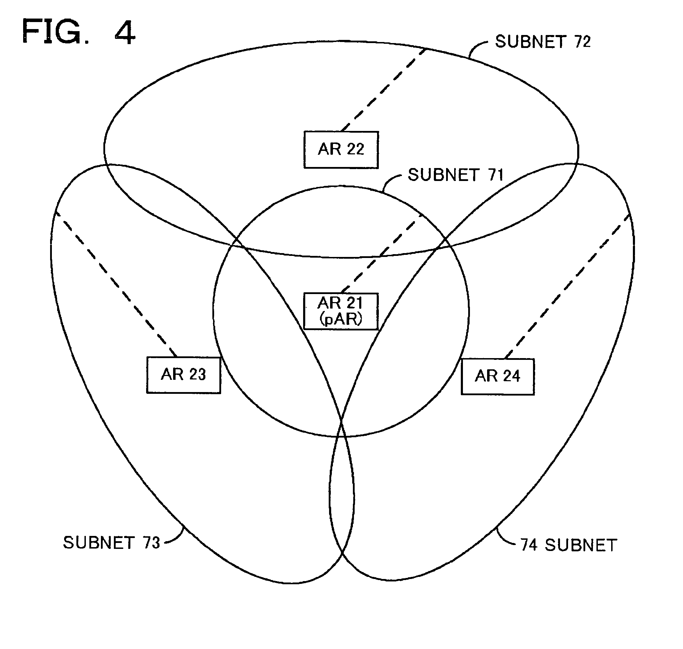

For example, in case the subnets 71 - 74 of AR21 - 24 are arranged as shown in Fig. 4 as seen in bird's-eye view, adjacent subnet of the subnet 71 of AR21 is turned to subnets 72 - 74, and address information usable at each of the subnets 72 - 74 is stored in the address storing means 51 of AR21. Also, pAR has necessarily no need to store address information usable in all of the adjacent subnets and may store only the address information usable at a specific adjacent subnet.

As described above, the AR present geographically in the surroundings is the one, which MN41 connected to pAR can use as nAR. These addresses can be obtained at a direct request by its pAR to all possible nARs (AR which can be nAR). In response to a direct request from pAR, nAR constitutes nCoA. This nCoA is not issued to any other MN41 so that its uniqueness in the subnet can be maintained, and even in case nCoA is randomly generated via stateless address auto-configuration by other MN41, it is guaranteed that the use of these is not allowed. It is desirable that these addresses are associated with a certain lifetime and are controlled.

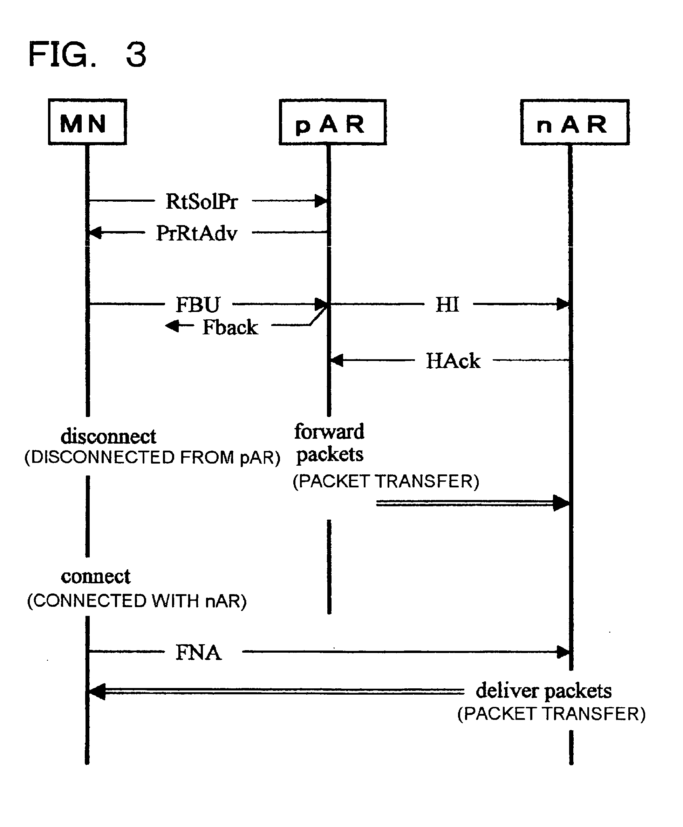

Fig. 3 is a sequence chart to show an operation example in case MN performs handover in a radio communication system according to the present invention.

The information as to which AR is a potential nAR for each AR is collected after the receiving of RtSolPr message or is accumulated in advance in the AR, and it is updated when there is a change (removal or addition of AR). Also, each AR acquires address information (nCoA) updated from AR geographically in the surroundings (potential nAR), and address information stored in the table is updated to this updated address information. As a result, each AR can store the address information usable at each subnet (address information usable as nCoA) of AR present geographically in the surroundings in the table within the address information storing means 51. Also, adjacent subnet, which is to be handover destination of MN41, can be judged from identification information related to the adjacent subnet such as New Attachment Point Link-Layer Address obtained in RtSolPr message, for instance. Therefore, pAR judges new handover destination of MN41 according to identification information regarding the adjacent subnet within RtSolPr message and can select nCoA, which MN41 needs.

When these tables can be used by pAR, there are two methods to utilize it, for instance.

The first method is to return FBack immediately without delay, i.e. without transmitting of HI message by pAR to FBU and without waiting HAck message. That is, in response to FBU from MN41, usable address is selected from the table, which is the address information storing means 51, and FBack including the selected usable address (i.e. nCoA) is sent back to MN at once regardless of transmitting and receiving of HI/HAck message to and from nAR. In so doing, the possibility is extremely increased in that MN41 receives FBack from pAR and MN41 has already nCoA effective for connection to nAR. Even when pAR provides an effective nCoA information to MN41 by a message different from FBack message, MN41 can quickly acquire nCoA usable in the subnet after handover.

The second method is that pAR sends an effective nCoA information by PrRtAdv message without waiting for FBU message to its MN41. Namely, pAR selects usable address from the table, which is the address information storing means 51 in response to RtSolPr message from MN41 and promptly sends PrRtAdv message including selected usable address (i.e. nCoA) to MN without waiting for FBU message from MN41. In this case, even when the connection between MN and pAR may be lost before FBU message is sent, MN can continue fast handover without the need to encapsulate FBU message in FNA message. Specifically, in this case, MN41 can acquire an effective nCoA information by PrRtAdv message sent from pAR without transmitting FBU message (or FNA message). Even in case pAR provides an effective nCoA information to MN41 by a message different from PrTrAdv message, MN41 can quickly acquire nCoA usable in the subnet after handover.

In the two cases as described above, HI message including MN link-layer address may be transmitted to nAR. In so doing, nAR can recognize MN when MN is connected to nAR, and initiation of buffering can be instructed.

As described above, according to the first method as given above, FBU is sent to pAR in advance. Even in case where FBack is not received due to disconnection, MN41 can acquire an effective nCoA information prior to the handover. This reduces the delay and decreases loss packets. According to the second method as given above, even in case where FBU is not transmitted to pAR due to disconnection, MN41 can acquire an effective nCoA information prior to the handover. This reduces the delay and decreases loss packets.

According to the present invention as described above, time delay caused by message exchange or the like can be reduced and fast handover can be carried out. Also, by reducing the delay, it is possible to decrease the loss packets.

### INDUSTRIAL APPLICABILITY

In the access router apparatus and the communication handover system and the communication handover method using the same according to the present invention, time delay caused by message exchange or the like can be reduced and fast handover can be carried out. This is useful in the technical fields such as high-speed radio communication using handover technique in a radio communication system using mobile IPv6.

## Claims

1. An access router apparatus to control a subnet, said apparatus comprising:
address information storing means for storing address information usable in at least one adjacent subnet arranged adjacent to said subnet controlled by the apparatus itself;
address selecting means for selecting said address information stored in said address information storing means; and
address providing means for providing said address information selected by said address selecting means to a mobile terminal connected to said subnet controlled by the apparatus itself.

2. The access router apparatus according to claim 1, wherein there is provided address information updating means for acquiring said address information from the access router to control said adjacent subnet and for storing said acquired address information to said address information storing means.

3. The access router apparatus according to claim 1 or 2, wherein said address selecting means is designed to select said address information to be provided to said mobile terminal in response to a request from said mobile terminal.

4. The access router apparatus according to claim 3, wherein said address selecting means selects said address information usable in said adjacent subnet at handover destination of said mobile terminal according to identification information related to said adjacent subnet received from said mobile terminal.

5. The access router apparatus according to claim 1 or 2, wherein, in case said address information is provided by said address providing means to said mobile terminal, said address information provided by said address providing means is deleted from said address information stored in said address information storing means.

6. The access router apparatus according to claim 1 or 2, wherein said apparatus is provided with a function relating to fast handover, and said address providing means is designed to transmit FBack message or PrRtAdv message including said address information selected by said address selecting means to said mobile terminal.

7. A communication handover system, comprising a plurality of access router apparatuses, each controlling a subnet, said system further comprising:
address information storing means for storing an address information usable in at least one adjacent subnet arranged adjacent to said subnet controlled by the apparatus itself, address selecting means for selecting said address information stored in said address information storing means, and address providing means for providing said address information selected by said address selecting means to a mobile terminal connected to said subnet controlled by the apparatus itself; and
said mobile terminal acquires said address information stored in said address information storing means from said specific access router apparatus under the condition that it is connected to said subnet of said specific access router prior to the handover to said adjacent subnet from said subnet.

8. A communication handover method in a communication handover system, comprising a plurality of access router apparatuses, each controlling a subnet, said method comprising the steps of:
acquiring and maintaining an address information usable in at least one adjacent subnet arranged adjacent to said subnet controlled by the apparatus itself by one access router apparatus among said plurality of access router apparatuses; and
providing said address information maintained by said access router apparatus where said mobile terminal is connected when a mobile terminal connected to one access router apparatus among said plurality of access router apparatuses carries out handover to said adjacent subnet from said subnet controlled by one access router apparatus among said plurality of access router apparatuses.
